# EUROPEAN PATENT SPECIFICATION

(11) **EP 4 496 715 B1**
(45) Date of publication and mention of the grant of the patent: **06.05.2026**
(21) Application number: 23716929.7
(22) Date of filing: 17.03.2023
(51) Int. Cl.: B60B 39/02

(54) **AN ANTI-AQUAPLANING SYSTEM FOR A MOTOR VEHICLE AND RELATED METHOD**
ANTI-AQUAPLANING-SYSTEM FÜR EIN KRAFTFAHRZEUG UND ZUGEHÖRIGES VERFAHREN
SYSTÈME ANTI-AQUAPLAGE POUR VÉHICULE À MOTEUR ET PROCÉDÉ ASSOCIÉ

(30) Priority: 21.03.2022 IT 202200005543
(43) Date of publication of application: 29.01.2025
(73) Proprietor: Easy Rain I.S.P.A., 20123 Milano (MI) (IT)
(72) Inventor: BLANDINA, Giovanni, 20123 Milano (MI) (IT); PIERALLINI, Mauro, 20123 Milano (MI) (IT)
(74) Representative: Buzzi, Notaro & Antonielli d'Oulx S.p.A.
(86) International application number: PCT/IB2023/052641
(87) International publication number: WO 2023/180890

(56) References cited:
- EP-A1- 3 000 615
- WO-A1-2005/097521
- US-A1- 2006 060 441

## Description

### Field of the Invention

The present invention relates to anti-aquaplaning systems for motor vehicles. Specifically, the invention has been developed with reference to anti-aquaplaning systems based on the injection of liquid towards the front of the tread.

### Prior Art

As it is generally known, aquaplaning is an event which may take place when a moving motor vehicle meets an extended water layer on the road surface, which is so abundant as to no longer enable a proper adhesion of the vehicle wheels on the road surface. Thus, in such conditions, wheels rise and/or slip on the wet road surface, with a consequent loss of adhesion of the tyres.

In order to reduce the risks deriving from such an event, the Applicant has already developed various technical solution including, for example, the solution described in the Italian Patent Applications for Industrial Invention n. 102014902296915 and n. 102021000011117, both in the name of the same Applicant. An example of an anti-aquaplaning system is also disclosed in EP3000615A1.

The solution described in the former document involves the use of injection devices, associated with at least one vehicle wheel and adapted to generate a jet of high-pressure fluid onto the wet road surface in front of the tread of the vehicle wheel, while the solution described in the latter document envisages a hydraulic supply unit pressurizing the supply circuit of the injectors to high pressure levels, so as to generate a fluid jet having a high injection pressure while ensuring particularly rapid intervention times.

These properties of the known systems are also responsible for the major technical problems thereof. Pressurizing the supply circuit of the injectors up to high pressure values, in order to ensure a markedly rapid intervention of the system, necessarily involves the use of a hydraulic supply unit, specifically of a hydraulic pump, which requires a high power consumption for operation and therefore the connection to a high performance electric motor, and which therefore is very bulky, heavy and expensive. Such features ultimately make the installation thereof on a vehicle extremely difficult.

### Object of the Invention

The present invention aims at solving the technical problems outlined in the foregoing. Specifically, the present invention aims at providing an anti-aquaplaning system for motor vehicles which is adapted to guarantee performances equal or superior to the known systems as regards injection pressure and rapidity of intervention, but which does not pose the aforementioned problems as regards weight, cost and bulkiness. Further, the invention aims at increasing the versatility of the anti-aquaplaning system, by widening the range of its uses on board a vehicle.

### Summary of the Invention

The object of the invention is achieved by a system and a method having the features set forth in the Claims that follow, which are an integral part of the technical teaching provided herein in relation to the invention.

### Brief Description of the Figures

The invention will now be described with reference to the annexed Figures, which are provided by way of non-limiting example only, wherein:
- Figure 1 is a schematic representation of an anti-aquaplaning system according to the invention,
- Figure 2 is a functional representation of the anti-aquaplaning system according to the invention,
- Figure 3 schematically shows the layout of the anti-aquaplaning system according to the invention on board a vehicle, and
- Figure 4 shows a state diagram of the system according to the invention.

### Detailed Description

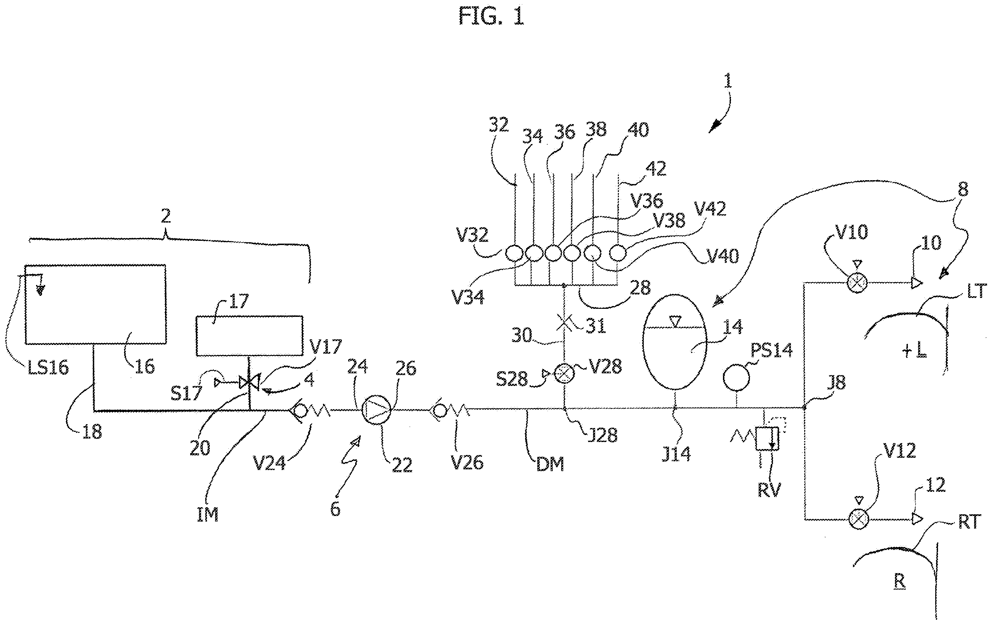

Reference 1 in Figure 1 generally denotes an anti-aquaplaning system for a motor vehicle according to first embodiments of the invention.

In the present and in other embodiments, the system 1 comprises:
- a storage unit 2 for operating liquids,
- a mixing unit 4,
- a supply unit 6
- a dispensing unit 8, the latter comprising at least a first and a second injector 10, 12 and at least one (pressurized) fluid accumulator 14, which is in fluid communication with the injectors 10, 12. Such injectors are configured for injecting liquid towards the ground at a position in front of, respectively, a right tread RT and a left tread LT of a right wheel R and a left wheel R of an axle of the motor vehicle. The fluid communication between accumulator 14 and injectors 10, 12 is regulated by means of flow control elements comprising a first valve V10 and a second valve V12, which are arranged upstream of injector 10 and of injector 12, respectively. In other embodiments, the presence may be envisaged of an accumulator which is associated to each injector 10, 12 and which is installed immediately upstream of the corresponding valve V10, V12.

Generally speaking, the dispensing unit 8 may be installed at any axle of the motor vehicle (either at the front axle, or at the rear axle, or at both); therefore, the installation is also possible at a rear axle, i.e. the first and the second injector 10, 12 may be configured for injecting liquid towards the ground at a position in front of, respectively, a right tread and a left tread of a right wheel and of a left wheel of a rear axle of the motor vehicle and/or of a front axle of the motor vehicle. This may take place irrespective of the number of accumulators 14 on board the system 1.

The storage unit 2 comprises a main reservoir 16, configured for storing a corresponding a main operating liquid, and at least one auxiliary reservoir 17 configured for storing a corresponding auxiliary operating liquid, specifically an anti-foaming agent, configured for mixing with the main operating fluid. In preferred embodiments, the main reservoir 14 is chosen to be the reservoir of windshield washing liquid (water and washing agent) of the motor vehicle.

The mixing unit 4 comprises a manifold IM (or intake manifold) which is hydraulically and individually connected to the main reservoir 16 and the auxiliary reservoir 17. Specifically, the manifold IM receives the following hydraulic connections:
- a hydraulic connection 18 for the main reservoir 16,
- a hydraulic connection 20 for the auxiliary reservoir 17.

The mixing unit 6 also comprises an electrically operated valve V17 for the auxiliary reservoir 17, which is specifically arranged at the hydraulic connection 20 of the auxiliary reservoir 17 and which is driven by a driving signal S17.

The electrically operated valve V17 is configured for selectively enabling the transit of the auxiliary operating liquid from the auxiliary reservoir 17 to the manifold IM, and therefore it may be operated in such a way as to take a closed position, whereby the transit is blocked, or an open position whereby the transit is enabled.

However, it must be borne in mind that the mixing unit 4 may generally be omitted by providing a pre-mixed solution. In other words, it is possible to envisage embodiments wherein the storage unit 2 only comprises reservoir 16, which stores a windshield washing solution (water and washing liquid) mixed with an anti-foaming agent. In such cases, the mixture of operating liquids has a fixed and unchangeable composition.

The supply unit 6 comprises a pump 22 including an inlet port 24 and a delivery port 26. In a preferred embodiment, the pump 22 is provided with (preferably three) radial pumping elements.

Upstream of the inlet port (but downstream of the junction of the hydraulic connection 20 to manifold IM) there is provided a one-way inlet valve V24, while downstream of the delivery port 26 (but upstream of accumulator 14) there is provided a one-way delivery valve V26. Both valves V24 and V26 enable the hydraulic flow only in a direction corresponding to the operation; therefore, valve V24 enables the transit from manifold IM towards the delivery port V24, while valve V26 only enables the transit out of port 26.

From the diagram of Figure 1, it may be observed that manifold IM, and the reservoirs 16, 17 therewith, are hydraulically connected to the inlet port 24 of pump 22. For the auxiliary reservoir, the hydraulic connection is enabled when valve V17 is in the open position, while the main reservoir 16 is always in a condition of enabled hydraulic connection.

The valve 17 is therefore configured for selectively enabling a transit of auxiliary operating liquid in the hydraulic connection 20 between the auxiliary reservoir 17 and the collector IM, so as to enable mixing the main operating liquid, coming from reservoir 16, with the auxiliary operating liquid, thereby defining a mixture of operating liquids of the system. It will be remarked that the mixture of operating liquids may comprise only the liquid in reservoir 16 (i.e., a mixture of 100% 16 and 0° 17), or a mixture of the liquids in reservoir 16 and in reservoir 17.

The delivery port 26 of pump 22 is hydraulically connected to a manifold DM (i.e., a delivery manifold), which is connected with a washing manifold 28, the accumulator 14 and the injectors 10 and 12.

More specifically, it is possible to find, on manifold DM, three circuit junctions, specifically:
- a junction J28 at which the manifold 28 establishes fluid communication with manifold DM through a hydraulic connection 30 (whereon a pressure reducer 31 is preferably arranged); an electrically operated valve V28 is arranged on the hydraulic connection 30 between the manifold 28 and the junction J28, and it is driven by a driving signal S28. The electrically operated valve V28 is configured for selectively enabling the transit of the mixture of operating liquids from manifold DM towards manifold 28, i.e., it may be controlled to take a closed position, wherein transit is disabled, and an open position, wherein transit is enabled;
- a junction J14, at which the accumulator 14 establishes fluid communication with manifold DM;
- a junction J8, at which the injectors 10 and 12 establish fluid communication with manifold DM. The valves V10 and V12 are arranged between the junction J8 and the respective injectors 10 and 12.

Junction J28 is preferably arranged hydraulically upstream of junction J14, which in turn is arranged hydraulically upstream junction J8. However, though keeping the junction J14 arranged upstream of junction J8, junction J28 may be arranged downstream junction J14. All junctions J28, J14 and J6 are arranged hydraulically downstream of valve V26.

However, it must be borne in mind that the configuration of the user devices connected to the manifold DM may vary according to the embodiments, especially as a function of the number of accumulators 14 and of the number of the flow control elements, which manage the transit of the mixture of operating liquids in the fluid communication between the accumulator(s) 14 and the injectors 10, 12.

Specifically, the embodiments may show at least three alternative configurations, i.e.:
- (as already described) a single fluid accumulator 14 in fluid communication with said first injector 10 and second injector 12, wherein the single fluid accumulator 14 is connected to the delivery manifold DM at junction J14, wherein the first injector 10 and the second injector 12 are connected to the delivery manifold DM at junction J8 - which is arranged downstream of junction J14, and wherein a first flow control element (valve V10) is hydraulically arranged between the junction J8 and the first injector 10, and a second flow control element (valve V12) is hydraulically arranged between the junction J8 and the second injector 12,
- a single fluid accumulator 14 in fluid communication with the first injector 10 and the second injector 12, wherein the single fluid accumulator 14 is connected to the delivery manifold DM at junction J14, wherein the first injector 10 and the second injector 12 are connected to the delivery manifold DM at junction J8 - which is arranged downstream of junction J14, and wherein a single flow control element (similar to the valves V10 and V12) is hydraulically arranged between the junction J14 and the junction J8; in this embodiment, the injection of liquid through the injectors 10, 12 is controlled by opening and closing the single flow control element;
- a first fluid accumulator 14, in fluid communication with the first injector 10, and a second fluid accumulator 14, in fluid communication with the second injector 12, wherein a first flow control element (valve V10) is hydraulically arranged between the first fluid accumulator 14 and the first injector 10, and a second flow control element (valve V12) is hydraulically arranged between the second fluid accumulator 14 and the second injector 12; in this embodiment, both fluid accumulators are connected to the delivery manifold DM at a single junction corresponding to junction J8, while junction J14 is omitted (the junction J28 is kept, and is arranged upstream junction J14). A plurality of washing hydraulic lines 32, 34, 36, 38, 40, 42 depart from the washing manifold 28, and each of them is equipped with an electrically operated valve, respectively, V32, V34, V36, V38, V40, V42, configured for enabling and disabling the transit of fluid coming from manifold 28 (by being moved, in the same way as the other valves in the system, between an open and a closed position). Each washing hydraulic line connects the manifold 28 to a corresponding washing device, configured for dispensing the mixture of operating liquids to corresponding sensors or vehicle equipment for the cleaning thereof. By way of example, line 32 may connect the manifold 28 to one or more windshield washing nozzles, line 34 may connect the manifold 28 to one or more (typically two) nozzles for cleaning a medium-range radar, line 36 may connect the manifold 28 to one or more nozzles for cleaning a long-range radar, line 38 may connect the manifold 28 to one or more nozzles for cleaning a LiDAR device, line 40 may connect the collector 28 to one or more (typically two) nozzles for cleaning ball cameras, and line 42 may connect manifold 28 to one or more nozzles for cleaning a rear camera. Of course, the number of the hydraulic lines connected to manifold 28 may vary according to the user devices to be supplied, and therefore may be lower or higher than described in the above example.

The supply unit 6 is therefore configured for drawing the mixture of operating fluids from the manifold IM through the inlet port 24, in order to send it to the manifold 28, to the accumulator 14 and to the injectors 10, 12. However, as will be seen in the following, providing liquid directly from the pump 22 to the injectors 10, 12 is not a solution generally adopted in the present invention.

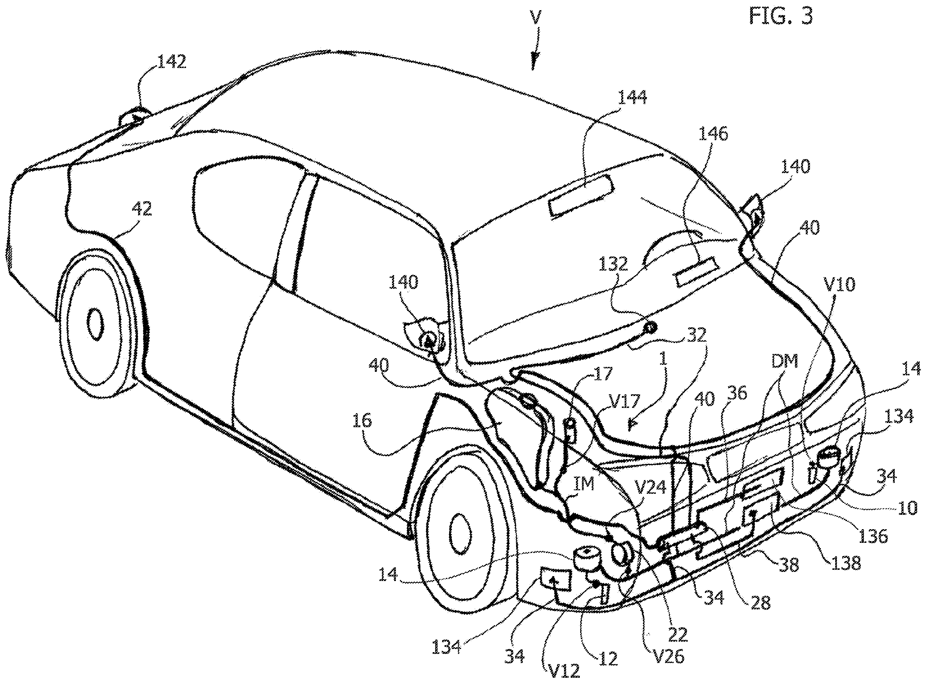

Figure 3 shows an exemplary layout of the system 1 on a vehicle V, and also shows the location of the devices of vehicle V to which the hydraulic lines and the components of system 1 are associated, and specifically:
- a front windscreen washing nozzle 132 (line 32; of course, it is possible to branch the hydraulic line 32 in such a way as to dispense liquid also onto the rear window);
- a pair of medium-range radars 134 (line 34);
- a long-range radar 136 (line 36);
- a LiDAR 138 (line 38);
- a pair of ball cameras 140 (line 40);
- a rear camera 142 (line 42).

References 144 and 146 respectively denote a stereoscopic camera and a driver's seat camera, which are located behind the windscreen of the vehicle and are therefore subjected to cleaning/washing when the windscreen washing nozzles 132 are activated.

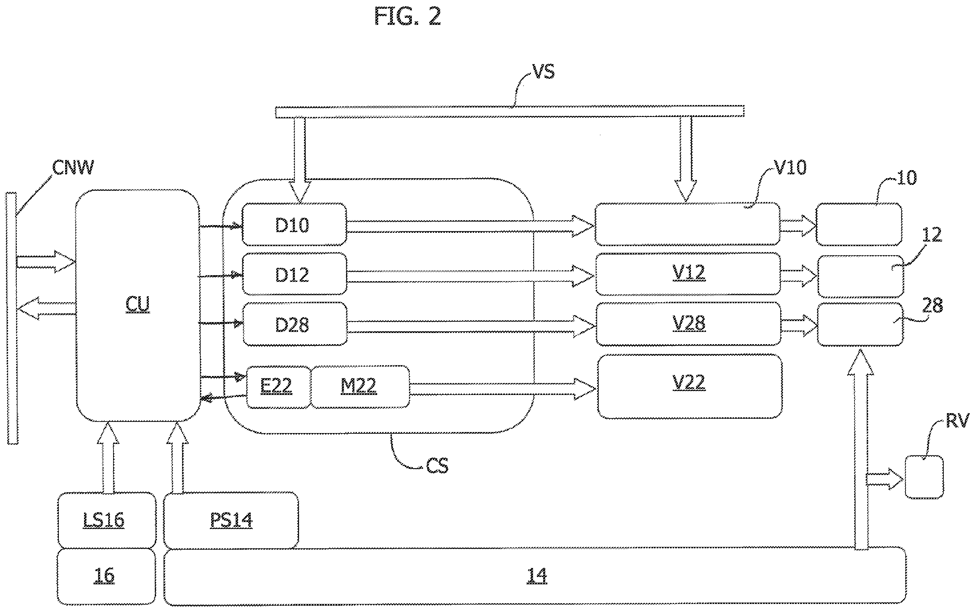

Figure 2 shows a functional diagram of the system 1 according to the invention, wherein the structure of the system circuitry is simplified for clarity of exposition, and wherein it is possible to see a control section CS which drives the electrically operated valves of the system 1 and the pump 22. As stated in the foregoing, for simplicity the diagram shows, in the form of functional blocks, only the valves V10, V12 and V28, but for the valves V32-V42, albeit not illustrated, it is possible to assume a representation similar to the valves V10, V12, V28. The components that have already been described with reference to Figure 1 are denoted by the same reference number.

The control section CS comprises a driver D10 for the valve V10, a driver D12 for the valve V12 and a driver D28 for the valve V28. The control section moreover comprises a driver / control unit E22 for an electric motor M22 which operates the pump 22. All the circuits / the units in the control section CS are electrically supplied by a power supply VS (generally a 12V CC supply) which is common to the valves V10, V12, V28 and to the valves V32-V42 which may be present in addition.

The control section CS logically depends on a general control unit CU of the system. The unit CU is operatively connected to a CAN network CNW of the vehicle, so that the unit CU may receive in real time the data of the attitude sensors of the vehicle (in order to activate the injectors 10, 12), but also of the sensors and equipment of the vehicle which are involved in the driving assistance and which are more generally assisted for washing and cleaning by the hydraulic lines departing from manifold 28. The general control unit CU is operatively connected (in output for circuits D10, D12 and D28, and in input/output for the circuit E22), and is moreover operatively connected (in input) with a level sensor LS16, configured for detecting the liquid level within reservoir 16, and a pressure sensor PS14 installed on manifold DM, specifically in a position between junctions J14 and J8. On the manifold DM there is moreover installed a pressure relief valve RV, preferably arranged at a position between junction J8 and pressure sensor PS14.

The pressure sensor PS14 is configured to detect the fluid pressure in the accumulator 14, and therefore in the hydraulic lines upstream of the valves V10 and V12, while the valve RV is configured for discharging fluid to the environment when a threshold pressure is exceeded; such threshold pressure is chosen in such a way as to preserve the structural integrity of the components of system 1.

The system 1 operates as follows:
On a general level, the system 1 implements the operation of the supply unit 6, specifically of pump 22, according to the charging cycles and not according to operations limited to the interventions of system 1, which on the contrary is the case for the known systems.

Pump 22 is mainly operated according to the reading of the sensor PS14, i.e., as a function of the pressure within manifold DM, therefore within accumulator 14 and upstream of injectors 10, 12. Secondary control signals of the pump 22 regard the opening or closing of valves V32-V42.

More specifically, thanks to the mixing unit 4 it is possible to define a mixture of operating liquids of system 1 for charging accumulator 14, or accumulators 14 if they are present in a number higher than one.

The mixture of operating liquids of the system mainly comprises a mixture of windscreen washing solution (water and windscreen washing liquid), stored in reservoir 16, and of an anti-foaming agent stored in reservoir 17. The anti-foaming agent is united to the windscreen washing solution coming from reservoir 16 by opening valve V17 and by introducing it into the liquid flow transiting in manifold IM during the intake through port 26.

The delivery of the mixture of operating liquids by pump 22 through delivery port 24 progressively fills the circuit section downstream of delivery port 26, thereby charging accumulator(s) 14. In a fashion known in itself, each accumulator 14 is charged by the fluid while the pressure progressively increases, due to the compression of the dead space typically filled with inert gas.

While the accumulator(s) 14 is/are charged, valve V28 is generally kept closed, and valves V10 and V12 are always kept closed. In this way, the delivery pressure on port 26 is determined exclusively by the charging of accumulator(s) 14. The operation of pump 22 stops when the reading of sensor PS14 shows the achievement of a maximum charging pressure envisaged for system 1, wherein such maximum charging pressure is determined on the basis of the operation requirements of injectors 10, 12, i.e., of the requirements of the anti-aquaplaning intervention of system 1. The pressure relief valve RV prevents pressure overloads of the system 1.

At the end of charging accumulator(s) 14, the pump 22 is stopped, and the circuit section downstream of the delivery thereof (essentially manifold DM and all the user devices connected thereto at junctions J28, J14, J8) statically contains the mixture of operating liquids of system 1, which is pressurized at the maximum charging pressure.

When an intervention of the anti-aquaplaning system 1 is required, on the basis of the data coming from the CAN network CNW of the vehicle and from a consequent control sent by the control unit CU to the drivers V10 and V12, the valves V10 and V12 are switched to the open position for a predetermined time period, during which a jet of liquid (the mixture of operating liquids) is dispensed towards a position in front of the treads RT and LT of vehicle V. During the injection of the liquid, the injection pressure decreases from the maximum value at the beginning of the intervention (e.g., 140 bar, the maximum charging pressure) to a value at the end of the intervention (e.g., 60 bar). The valves V10, V12 are then brought back to the closed position at the end of the intervention, and the pump 22 is reactivated, because sensor PS detects a pressure in the manifold DM which is not compatible with the operation of the anti-aquaplaning system. It must be remarked that the system is generally regulated in such a way that the pressure at the end of the intervention brings about a new activation of the motor M22 of pump 22.

When no anti-aquaplaning intervention is necessary, the system 1 may perform a distributed, on-demand cleaning of the devices or equipment 132-146 on board vehicle V. In this regard, the mixture of operating liquids, which is pressurized statically in the manifold DM, is also available to manifold 28 and is ready to supply the hydraulic lines 32-42. However, each of these hydraulic lines requires a liquid which is pressurized at values which are positively lower than the operating pressures of injectors 10, 12. To this end, when the valve V28 is opened the pressure reducer 31 sharply decreases the pressure upstream of manifold 28 to values which are compatible to the operation of the cleaning nozzles at the end of lines 32-42. The valves V32-V34 operate therefore with liquid having pressures lower than at valve V28 and valves V10, V12. Each user device connected to the lines 32-42 may be controlled independently from the others by simply switching the respective valve to the open position, and provided that the manifold 28 contains a mixture of operating liquids which is pressurized at values compatible with the operation. In this regard, a situation may occur wherein an intervention of the anti-aquaplaning system (i.e., an injection through injectors 10, 12) takes place at the same time as a cleaning event of devices or equipment 132-146 on board vehicle 1. At the same time, however, the pump 22 might be starting a new activation in order to recharge accumulator(s) 14; in order not to jeopardize a correct cleaning of the devices or equipment 132-146 it is possible to activate the pump 22 while the valve V28 and one or more of the valves V32-V34 are kept open, and therefore to supply the manifold 28 and the active hydraulic lines 32-34 with the mixture of operating liquids drawn directly from the delivery of the pump 22.

In such cases it is possible to temporarily disable the intake of antifoaming agent from the reservoir 17 during the direct supply to manifold 28, because the antifoaming agent is not strictly necessary for supplying the hydraulic lines 32-42; at the end of the cleaning operation, the valve V28 (and with it the valve(s) of the set V32-V42, which were previously active) is brought back to the closed position, and it is possible to restore the intake of defoaming agent by means of a new opening of valve V17, therefore carrying out a new charging of the system according to the reading of sensor PS14. The reading of sensor LS16 determines the operation of the system only when the liquid level in the reservoir 16 becomes insufficient. In such cases, unit CU emits a general danger warning, if the accumulator(s) 14 is/are charged, while if the liquid remains insufficient or if the anti-aquaplaning system is activated again, the unit CU - due to the impossibility of recharging accumulator(s) 14 - sends an error signal, thereby communicating the unavailability of an anti-aquaplaning intervention.

Therefore, generally speaking, the transit of the mixture of operating liquids from the delivery manifold DM to the washing manifold 28 is enabled both when the supply unit 6 (motor M22 - pump 22) is active (or is starting activation) and when the supply unit 6 (motor 22M - pump 22) is not active. In both cases, the transit of the mixture of operating liquids in the fluid communication between the at least one fluid accumulator 14 and the injectors 10, 12 is kept disabled (and therefore there is no concurrency with an intervention of the anti-aquaplaning system 1 which involves the injection of liquid through the injectors 10, 12).

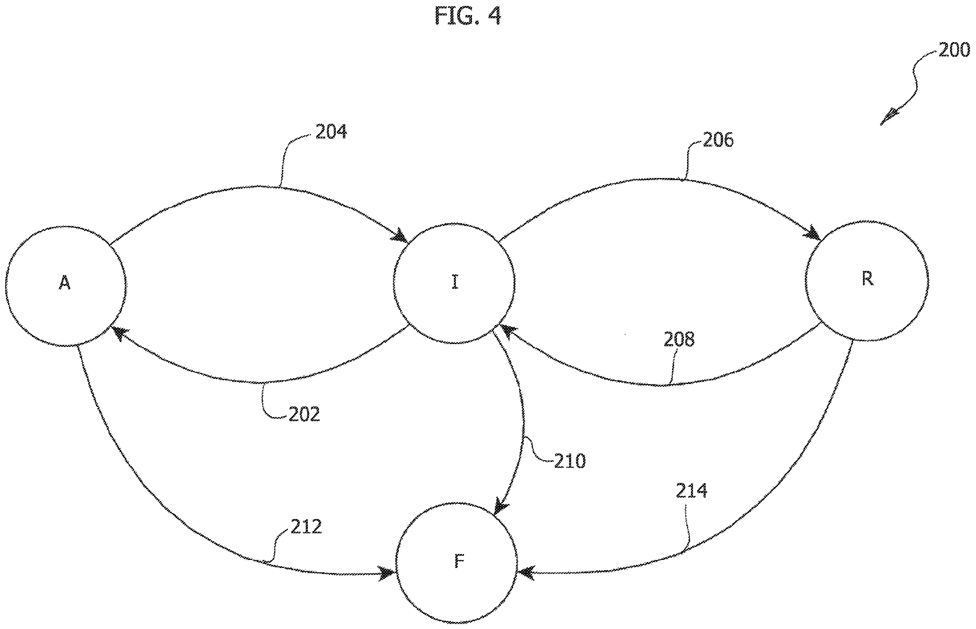

Figure 4 summarizes, in a state diagram 200, the operational modes of system 1 according to the invention described in the foregoing. Specifically, system 1 comprises four operational states:
- an inactive state I, corresponding to a state of deactivation of the supply unit 6 and to a standby state for the dispensing unit 8, specifically a standby state for the injectors 10, 12 (the system 1 does not act);
- an active state A, corresponding to an intervention of the anti-aquaplaning system 1, with an injection of liquid by means of the injectors 10, 12;
- a recharging state R, corresponding to a condition of activation of the supply unit 6, in order to restore the supply of mixture of operating fluids in the accumulator(s) 14, but possibly also corresponding to a situation wherein the activation of the supply unit 6 aims at directly supplying the washing manifold 28 for cleaning the devices and equipment on board the vehicle V;
- a failure state F, corresponding to a state wherein one or more components of system 1 is in a failure condition, or else in conditions which do not match the general conditions of vehicle V.

References 202-214 describe the possible evolutions of system 1 through the states I, A, R, F, and moreover show how the evolutions between states are not always bidirectional. Specifically, system 1 is configured for a bidirectional (inlet-outlet) transition from state I to state A and from state I to state R, but all the transitions to state F are monodirectional towards the state F itself. In other words, once that the system has transitioned to the failure state F, it is not configured for an autonomous exit from such a state without an external reset intervention. This safety measure is implemented because of the nature of the anti-aquaplaning system 1, which is critical with reference to the safety of vehicle V.

The transitions from state I to state A are associated with references 202 (from I to A) and 204 (from A to I). Transition 202 corresponds to the intervention of the anti-aquaplaning system 1, with the injection of liquid through the injectors 10, 12. Transition 204 corresponds to the end of the intervention of said system 1 due to the disappearance of the conditions triggering aquaplaning (e.g., vehicle V has passed the water pool which generated the aquaplaning event), or due to the pressure drop of the mixture of operating liquids in the accumulator(s) 14 below a minimum value.

The transitions from state I to state R are associated with references 206 (from I to R) and 208 (from R to I). Transition 206 corresponds to the (re)activation of the supply unit 6 for recharging the accumulator(s) 14 after an intervention of the anti-aquaplaning system 1. In this regard, transition 206 corresponds to an evolution of transition 204. Transition 206 may moreover represent the condition of system 1 when - while recharging the accumulator(s) 14 - the washing manifold 28 is supplied directly. Transition 208 corresponds to achieving the charged conditions of the accumulator(s) 14 and to the subsequent deactivation of the supply unit 6.

Transitions 210, 212 and 214 correspond to the case of a failure of the system at various levels. Transition 210 represents failures occurring in system 1 in the inactive state, e.g. a breakdown of motor M22 of pump 22 or an anomaly in the driving circuits D10, D12, D28, which may jeopardize the intervention of the anti-aquaplaning system or the cleaning of the sensors / equipment on board vehicle V. Another event that may lead to the transition 210 is the depletion of liquid in reservoir 16.

Transition 212 takes place, for example, in the case of a failure of the dispensing unit 8, and specifically in the case of failure of valves V10, V12 during the intervention of the anti-aquaplaning system. This may comprise a failure to open the valves in spite of the full efficacy of the drivers D10, D12, or the unexpected closing or one or more of the valves V10, V12 (the number depends on the valve-accumulator configurations described in the foregoing) during injection.

Finally, transition 214 takes place when recharging one or more accumulators is not successful, e.g. in the case of a failure or an overload of motor M22, of a failure to stop motor M22 when the charging pressure is achieved (by the intervention of valve RV), of the decrease of the level of liquid in reservoir 16 below a minimum safety amount or below the amount necessary to complete recharging, or of a failure to reach the charging pressure after a predetermined time, which reveals liquid leaks in system 1.

The effectiveness of liquid-jet anti-aquaplaning system such as system 1 depends on various physical and geometric factors, which characterize the liquid jet ejected by injectors 10, 12. Such factors include the injection pressure of the liquid, which must generally remain, during the dispensing of the jet, between a maximum value (e.g., 150 bar) and a minimum value (e.g., 60 bar), the amount of fluid delivered in time (i.e., the flow rate of each injector, e.g., 9 l/min for each injector), the minimum duration of the jet (e.g., 3 seconds) and the rapidity of jet activation, i.e., the maximum time necessary to produce a jet having the features described in the foregoing (e.g., less than 100 ms).

In a known system, such as described in Patent Application N° 102021000011117 in the name of the same Applicant, an electrically operated pump generates the required fluid flow rate directly, without an accumulation or a recharge of the system. Therefore, the physical factors described in the foregoing determine the size, the power consumption and ultimately the weight and the cost of the pump. It is possible to define the inner volume of the pumping element of a piston pump on the basis of the necessary flow rate and of the jet duration. Moreover, it is possible to define the necessary compression force, i.e., the work required, and, if the activation time is known, the power needed to compress the fluid to the required pressure.

Finally, from this value and from the necessary activation rapidity, it is possible to determine the sizing of the electric motor adapted to operate the pumping element, and the determination of the current intensity values determines in turn the optimal voltage at which the electric motor must be supplied.

Again by way of example, and anti-aquaplaning system as described in Patent Application N° 102021000011117, dispensing a jet with an average flow rate of 9 l/min for each injector, at an average pressure of 90 bar for a jet duration of 1,5 seconds, requires a pump unit having the approximate size of 400 mm x 200 mm x 200 mm (with a volume of approximately 10 dm³) and weighing 35 kg (if it is made of aluminium), including an electric motor with an approximate power of 5 Kw with a supply voltage of 48V.

In the present invention, the physical factors which characterize the fluid jet for the anti-aquaplaning action mentioned in the foregoing are ensured by the accumulation of the fluid within the accumulator(s) 14, the preferred but not exclusive embodiment whereof involves the compression of an inert gas (e.g., nitrogen) in a dead space, by means of the movement of the fluid against an elastic membrane or a piston, which isolate the fluid from the gas.

By way of example, a gas accumulator 14 containing the necessary amount of liquid (approximately 1.3 litres) to guarantee a jet with a duration of 3.5 seconds, starting from a maximum pressure of 140 bar and discharging down to a minimum pressure of 60 bar, while guaranteeing a flow rate of 9 l/min for each injector 10, 12, has a size of approximately 275 mm x 166 mm x 166 mm (with a total volume of approximately 6 dm³) and a weight of about 8 Kg, when it is made of steel (which may be reduced by a factor of 0,6 in embodiments comprising composite materials).

It must moreover be borne in mind that it is possible to divide the amount of accumulated liquid into a plurality of accumulators 14 (for example two, as shown in Figure 3; in the case of two or more accumulators, they are all identical), therefore simplifying the installation thereof in the engine compartment of vehicle V.

As described in the foregoing, the operation of pump 22 according to the present invention is not influenced by the delivery of liquid during the intervention of the anti-aquaplaning system 1: the latter event is brought about exclusively by the discharge of the accumulator(s) and by the switching of the valves V10, V12 to the open position.

The physical factors for the sizing of the pump and of the associated electric motor may therefore be modified with respect to the known art described in the foregoing; specifically, it is no longer necessary to guarantee a flow rate in the previously mentioned quantity because, in substitution thereof, it is possible to increase, according to need, the recharging time of the accumulator(s) 14 after an intervention of the anti-aquaplaning system 1 by means of a discharge of the accumulator(s) by means of the injection through injectors 10, 12.

By way of example, assuming a recharging time of accumulator(s) 14 amounting to 6 minutes, with an accumulator or with accumulators having the features described in the foregoing it is sufficient to guarantee a flow rate of 0,21 l/min.

It must be borne in mind that such a flow rate also enables satisfying the possible fluid requirements of the user devices connected to manifold 28, when it becomes necessary to clean one or more such devices as mentioned with reference to Figure 3 during a recharging event. Therefore, generally speaking, according to the invention the supply unit 6 may directly supply the manifold 28 and the user devices associated thereto, but it does not directly supply the injectors 10, 12, because such a flow rate is anyway insufficient to guarantee an effective intervention of the anti-aquaplaning system (as described in the foregoing, the supply of injectors 10, 12, and therefore the intervention events of the anti-aquaplaning system, is carried out by the accumulator(s) 14).

On this basis, therefore, it is possible to size the pump 22 and the electric motor M22 starting from said flow rate value, and by imposing a maximum recharging pressure of the accumulator(s) 14 equal to 140 bar, a motor-pump unit (M22+22) is obtained having a size of about 200 mm x 200 mm x 100 mm, a volume of about 1.7 dm³ and a weight of about 6 Kg. In this example, motor M22 has a power of about 0,4 Kw and a supply voltage of 12 V.

In addition to the advantages listed in the foregoing as regards the necessary electric power, the weight and the volume of the components, another advantage consists in simplifying the control circuit E22 of pump 22, because it is no longer necessary to envisage a step-by-step control of the electric motor M22 at the same time as the opening signal of valves V10, V12, as it is the case of the solution proposed by Patent Application N° 102021000011117.

In the latter solution it is actually necessary to align the position of the pump piston, to control the pushing stroke thereof and to brake the movement thereof according to the dispensed amount of fluid and the related opening of the valves upstream of the injector, as well as performing a stroke reversal of the piston in order to the recharge the liquid needed at the subsequent activation. In other words, the position of the pump piston and the general operation thereof must be in phase with the events of intervention of the anti-aquaplaning system. Moreover, this imposes a constraint on the choice of the pump type, by substantially limiting such choice to single piston solutions with a step-by-step control.

In the case of the present invention there is no such need: the activation of motor M22 and of pump 22 and the opening control of the valves V10, V12 may be completely independent, thereby requiring a definitely lower number of control parameters. This can be clearly seen in the diagram of Figure 2: the activation of pump 22 essentially depends on the reading of sensor PS14. In this regard, moreover, it is possible to select simpler pumps in a wider range of possibilities, because the number, the type and the movement of the pumping elements are not part of the control chain.

A further advantage of the present invention consists in the availability of liquid under pressure which may be used at any moment for cleaning the various sensors or equipment 132-146 which may be present in the autonomous driving vehicles at various levels. Such sensors, which in current implementations are present in a high number (from four to eight including radars, cameras, LiDARs for levels 2-3 or higher of autonomous driving) require a self-cleaning system when their detection ability is limited by dust, mud or snow, wherein self-cleaning must be controlled independently for each sensor, in order not to limit the overall detecting capability of the system.

Thanks to the individual control of the valves V32-V42, each user device connected thereto may be controlled separately according to the needs, to the charging state of the accumulator(s) 14 and to the amount of liquid necessary for cleaning (which depends on the type of the sensors and on the current amount of dirt), and it is moreover possible to choose between a withdrawal of liquid from accumulator (14) and directly from the pump delivery (thus from reservoirs 16, 17). This enables, i.a., to avoid envisaging a plurality of small low-pressure pumps for the supply of each hydraulic line.

Of course, the implementation details and the embodiments may be amply vary with respect to what has been described and illustrated in the foregoing, without departing from the scope of the present invention, as defined in the annexed Claims.

## Claims

1. An anti-aquaplaning system (1) for a motor vehicle, comprising:
- a storage unit (2) for operating liquids
- a supply unit (6)
- a dispensing unit (8),
wherein:
- said dispensing unit (8) comprises at least a first injector and a second injector (10, 12) configured for injecting liquid towards the ground at a position in front of, respectively, a right tread (RT) and a left tread (LT) of a right wheel (R) and a left wheel (L) of an axle of the motor vehicle, and **characterized by** at least one fluid accumulator (14) configured for storing liquid under pressure and in fluid communication with said first injector (10) and second injector (12),
- wherein said supply unit (6; 106) is configured for drawing an operating liquid mixture from said storage unit (2) and delivering said operating liquid mixture to said at least one fluid accumulator (14), and
wherein the dispensing unit (8) comprises at least one flow control element (V10, V12) configured to enable a flow of operational liquid mixture in the fluid communication between said at least one fluid accumulator (14) and said first injector (10) and second injector (12) in the event of an intervention of the anti-aquaplaning system (1) comprising injection of liquid by means of said first injector (10) and second injector (12), and for disabling a flow of operating liquid mixture in the fluid communication between said at least one fluid accumulator (14) and said first injector (10) and second injector (12) for charging said fluid accumulator (14) with the operating liquid mixture.

2. The anti-aquaplaning system (1) according to claim 1, wherein said supply unit (6) comprises a pump including an inlet port (24) and a delivery port (26),
said inlet port (24) being hydraulically connected to an inlet manifold (IM), said storage unit being hydraulically connected to said inlet manifold (IM),
said delivery port (26) being hydraulically connected to a delivery manifold (DM), said dispensing unit being hydraulically connected to said delivery manifold (DM).

3. The anti-aquaplaning system (1) according to claim 2, comprising, in alternative:
- a single fluid accumulator (14) in fluid communication with said first injector (10) and second injector (12), said single fluid accumulator (14) being connected to said delivery manifold (DM) at a first junction (J14), said first injector (10) and second injector (12) being connected to said delivery manifold (DM) at a second junction (J8) downstream of said first junction (J14), a first flow control element (V10) hydraulically arranged between said second junction (J8) and said first injector (10), and a second flow control element (V12) hydraulically arranged between said second junction (J8) and said second injector (12),
- a single fluid accumulator (14) in fluid communication with said first injector (10) and said second injector (12), said single fluid accumulator (14) being connected to said delivery manifold (DM) at a first junction (J14), said first injector (10) and second injector (12) being connected to said delivery manifold (DM) at a second junction (J8) downstream of said first junction (J14), a single flow control element hydraulically arranged between said first junction (J14) and said second junction (J8),
- a first fluid accumulator (14) in fluid communication with said first injector (10) and a second fluid accumulator (14) in fluid communication with said second injector (12), a first flow control element (V10) hydraulically arranged between said first fluid accumulator (14) and said first injector (10), and a second flow control element (V12) hydraulically arranged between said second fluid accumulator (14) and said second injector (12), said first fluid accumulator (14) and said second fluid accumulator (14) being connected to said delivery manifold at a single junction (J8).

4. The anti-aquaplaning system (1) according to any one of the preceding claims, wherein said storage unit (2) comprises at least one main reservoir (14) configured to store a main operating liquid and an auxiliary reservoir (16, 17) configured to store a corresponding auxiliary operating liquid, each of said main reservoir (16) and at least one auxiliary reservoir (16, 17) having a hydraulic connection to said supply unit (6), and
wherein said system (1) further comprises a mixing unit (104) configured to mix a predetermined amount of said main operating liquid with a predetermined amount of said auxiliary operating liquid, defining the operating liquid mixture of said system.

5. The anti-aquaplaning system (1) according to claim 4, wherein said inlet manifold (IM) is hydraulically connected to said main reservoir (16) and said auxiliary reservoir (17), and wherein said mixing unit (4) comprises an electrically operated valve (V17) for said auxiliary reservoir (17) configured to selectively enable a liquid flow in the hydraulic connection between said auxiliary reservoir (17) and said intake manifold (IM), so as to enable mixing between said main operating liquid and said corresponding auxiliary operating liquid to define the operating liquid mixture of the system.

6. The anti-aquaplaning system (1) according to claim 2, further comprising a washing manifold (28) in fluid communication with said delivery manifold (DM), and a further flow control element (V28) configured to selectively enable a flow of operating liquid mixture from said discharge manifold (DM) to said washing manifold (28), the washing manifold (28) comprising a plurality of hydraulic washing lines (32, 34, 36, 38, 40, 42) connecting said washing manifold (28) to corresponding washing devices configured to dispense the operating liquid mixture towards corresponding sensors or equipment of a vehicle for cleaning said sensors or equipment, wherein each hydraulic washing line comprises a valve configured to selectively enable flow of said operating liquid mixture to the corresponding washing device.

7. The anti-aquaplaning system (1) according to claim 2, further comprising a pressure sensor (PS14) configured to detect a pressure of the operating liquid mixture in said delivery manifold (DM).

8. A method for dispensing an operating liquid mixture to a delivery unit (8; 108) of an anti-aquaplaning system according to any one of claims 1 to 7, comprising:
- activating said supply unit (6) to draw said operating liquid mixture from said storage unit (2) and to send said operating liquid mixture to said at least one liquid accumulator (14) until a charging pressure of said at least one liquid accumulator (14) is reached,
- stopping the activation of said supply unit (6) when said charging pressure is reached,
- enabling a flow of operating liquid mixture in the fluid communication between said at least one fluid accumulator (14) and said first injector (10) and said second injector (12) in the event of an intervention of the anti-aquaplaning system (1) comprising liquid injection by means of said first injector (10) and said second injector (12),
- disabling the flow of operating liquid mixture in the fluid communication between said at least one fluid accumulator (14) and said first injector (10) and said second injector (12) at the end of said anti-aquaplaning system intervention,
- reactivating said supply unit (6) to charge said fluid accumulator (14) with said operating liquid mixture until charging pressure is reached, said reactivating said supply unit (6) being performed after said disabling the flow of operating liquid mixture.

9. The method according to claim 8, further comprising enabling a flow of operating liquid mixture from said delivery manifold (DM) to said washing manifold (28) and from said washing manifold to one or more hydraulic washing lines (32, 34, 36, 38, 40, 42) of said washing manifold to deliver the operating liquid mixture towards corresponding sensors or equipment of a vehicle for cleaning said sensors or equipment, wherein said enabling a flow of operating liquid mixture from said delivery manifold (DM) to said washing manifold (28) comprises reducing the pressure of the operating liquid mixture coming from said delivery manifold (DM).

10. The method according to claim 8 or claim 9, wherein said activating said supply unit (6) to draw said operating liquid mixture from said storage unit (2) comprises disabling the flow of operating liquid mixture in the fluid communication between said at least one fluid accumulator (14) and said first injector (10) and said second injector (12).

11. The method according to claim 9, wherein said enabling a flow of operating liquid mixture from said delivery manifold (DM) to said washing manifold (28) can be done both with said supply unit (6) active, and with said supply unit inactive, the transit of operating liquid mixture in the fluid communication between said at least one fluid accumulator (14) and said first injector (10) and second injector (12) being disabled.

12. A motor vehicle comprising an anti-aquaplaning system according to any one of claims 1 to 7.

## Patentansprüche

1. Anti-Aquaplaning-System (1) für ein Kraftfahrzeug, umfassend:
- eine Speichereinheit (2) für Betriebsflüssigkeiten,
- eine Versorgungseinheit (6),
- eine Ausgabeeinheit (8),
wobei:
- die Ausgabeeinheit (8) mindestens einen ersten Injektor und einen zweiten Injektor (10, 12) umfasst, die zum Spritzen einer Flüssigkeit in Richtung des Bodens an eine Stelle vor jeweils einer rechten Lauffläche (RT) und einer linken Lauffläche (LT) eines rechten Rads (R) und eines linken Rads (L) einer Achse des Kraftfahrzeugs eingerichtet sind, und **gekennzeichnet durch** mindestens einen Flüssigkeitsspeicher (14), der zum Speichern von Flüssigkeit unter Druck eingerichtet ist und in Fluidverbindung mit dem ersten Injektor (10) und dem zweiten Injektor (12) steht,
- wobei die Versorgungseinheit (6; 106) dazu eingerichtet ist, ein Betriebsflüssigkeitsgemisch aus der Speichereinheit (2) zu saugen und das Betriebsflüssigkeitsgemisch dem mindestens einen Flüssigkeitsspeicher (14) zuzuführen, und
wobei die Ausgabeeinheit (8) mindestens ein Durchflusssteuerungselement (V10, V12) umfasst, das dazu eingerichtet ist, einen Durchfluss von Betriebsflüssigkeitsgemisch in der Fluidverbindung zwischen dem mindestens einen Flüssigkeitsspeicher (14) und dem ersten Injektor (10) und dem zweiten Injektor (12) im Falle eines Eingreifens des Anti-Aquaplaning-Systems (1), das das Spritzen von Flüssigkeit mithilfe des ersten Injektors (10) und des zweiten Injektors (12) umfasst, zu ermöglichen und einen Durchfluss von Betriebsflüssigkeitsgemisch in der Fluidverbindung zwischen dem mindestens einen Flüssigkeitsspeicher (14) und dem ersten Injektor (10) und dem zweiten Injektor (12) zum Füllen des Flüssigkeitsspeichers (14) mit dem Betriebsflüssigkeitsgemisch zu unterbinden.

2. Anti-Aquaplaning-System (1) nach Anspruch 1, wobei die Versorgungseinheit (6) eine Pumpe umfasst, die einen Einlassanschluss (24) und einen Zuführanschluss (26) umfasst,
wobei der Einlassanschluss (24) hydraulisch mit einem Einlassverteiler (IM) verbunden ist, wobei die Speichereinheit hydraulisch mit dem Einlassverteiler (IM) verbunden ist,
wobei der Zuführanschluss (26) hydraulisch mit einem Zuführverteiler (DM) verbunden ist, wobei die Ausgabeeinheit hydraulisch mit dem Zuführverteiler (DM) verbunden ist.

3. Anti-Aquaplaning-System (1) nach Anspruch 2, umfassend als Alternative:
- einen einzigen Flüssigkeitsspeicher (14) in Fluidverbindung mit dem ersten Injektor (10) und dem zweiten Injektor (12), wobei der einzige Flüssigkeitsspeicher (14) mit dem Zuführverteiler (DM) an einer ersten Verzweigungsstelle (J14) verbunden ist, wobei der erste Injektor (10) und der zweite Injektor (12) mit dem Zuführverteiler (DM) an einer zweiten Verzweigungsstelle (J8) stromabwärts der ersten Verzweigungsstelle (J14) verbunden sind, wobei ein erstes Durchflusssteuerungselement (V10) hydraulisch zwischen der zweiten Verzweigungsstelle (J8) und dem ersten Injektor (10) angeordnet ist und wobei ein zweites Durchflusssteuerungselement (V12) hydraulisch zwischen der zweiten Verzweigungsstelle (J8) und dem zweiten Injektor (12) angeordnet ist,
- einen einzigen Flüssigkeitsspeicher (14) in Fluidverbindung mit dem ersten Injektor (10) und dem zweiten Injektor (12), wobei der einzige Flüssigkeitsspeicher (14) mit dem Zuführverteiler (DM) an einer ersten Verzweigungsstelle (J14) verbunden ist, wobei der erste Injektor (10) und der zweite Injektor (12) mit dem Zuführverteiler (DM) an einer zweiten Verzweigungsstelle (J8) stromabwärts der ersten Verzweigungsstelle (J14) verbunden sind, wobei ein einziges Durchflusssteuerungselement hydraulisch zwischen der ersten Verzweigungsstelle (J14) und der zweiten Verzweigungsstelle (J8) angeordnet ist,
- einen ersten Flüssigkeitsspeicher (14) in Fluidverbindung mit dem ersten Injektor (10) und einen zweiten Flüssigkeitsspeicher (14) in Fluidverbindung mit dem zweiten Injektor (12), ein erstes Durchflusssteuerungselement (V10), das hydraulisch zwischen dem ersten Flüssigkeitsspeicher (14) und dem ersten Injektor (10) angeordnet ist, und ein zweites Durchflusssteuerungselement (V12), das hydraulisch zwischen dem zweiten Flüssigkeitsspeicher (14) und dem zweiten Injektor (12) angeordnet ist, wobei der erste Flüssigkeitsspeicher (14) und der zweite Flüssigkeitsspeicher (14) mit dem Zuführverteiler an einer einzigen Verzweigungsstelle (J8) verbunden sind.

4. Anti-Aquaplaning-System (1) nach einem der vorhergehenden Ansprüche, wobei die Speichereinheit (2) mindestens einen Hauptspeicher (14) der zum Speichern einer Hauptbetriebsflüssigkeit eingerichtet ist, und einen Hilfsspeicher (16, 17), der zum Speichern einer entsprechenden Hilfsbetriebsflüssigkeit eingerichtet ist, umfasst, wobei jeder von dem Hauptspeicher (16) und dem mindestens einen Hilfsspeicher (16, 17) eine hydraulische Verbindung zur Versorgungseinheit (6) aufweist, und
wobei das System (1) ferner eine Mischeinheit (104) umfasst, die zum Mischen einer vorgegebenen Menge der Hauptbetriebsflüssigkeit mit einer vorgegebenen Menge der Hilfsbetriebsflüssigkeit eingerichtet ist, die das Betriebsflüssigkeitsgemisch des Systems definieren.

5. Anti-Aquaplaning-System (1) nach Anspruch 4, wobei der Einlassverteiler (IM) hydraulisch mit dem Hauptspeicher (16) und dem Hilfsspeicher (17) verbunden ist und wobei die Mischeinheit (4) ein elektrisch betriebenes Ventil (V17) für den Hilfsspeicher (17) umfasst, das dazu eingerichtet ist, selektiv einen Flüssigkeitsdurchfluss in der hydraulischen Verbindung zwischen dem Hilfsspeicher (17) und dem Einlassverteiler (IM) zu ermöglichen, um das Vermischen zwischen der Hauptbetriebsflüssigkeit und der entsprechenden Hilfsbetriebsflüssigkeit zu ermöglichen, um das Betriebsflüssigkeitsgemisch des Systems zu definieren.

6. Anti-Aquaplaning-System (1) nach Anspruch 2, ferner umfassend einen Waschverteiler (28) in Fluidverbindung mit dem Zuführverteiler (DM) und ein weiteres Durchflusssteuerungselement (V28), das dazu eingerichtet ist, selektiv einen Durchfluss von Betriebsflüssigkeitsgemisch vom Zuführverteiler (DM) zum Waschverteiler (28) zu ermöglichen, wobei der Waschverteiler (28) eine Vielzahl von hydraulischen Waschleitungen (32, 34, 36, 38, 40, 42) umfasst, die den Waschverteiler (28) mit entsprechenden Waschvorrichtungen verbinden, die dazu eingerichtet sind, das Betriebsflüssigkeitsgemisch in Richtung entsprechender Sensoren oder Ausrüstung eines Fahrzeugs zum Reinigen der Sensoren oder Ausrüstung auszugeben, wobei jede hydraulische Waschleitung ein Ventil umfasst, das dazu eingerichtet ist, selektiv einen Durchfluss des Betriebsflüssigkeitsgemischs zur entsprechenden Waschvorrichtung zu ermöglichen.

7. Anti-Aquaplaning-System (1) nach Anspruch 2, ferner umfassend einen Drucksensor (PS14), der dazu eingerichtet ist, einen Druck des Betriebsflüssigkeitsgemischs im Zuführverteiler (DM) zu detektieren.

8. Verfahren zum Ausgeben eines Betriebsflüssigkeitsgemischs an eine Zuführeinheit (8; 108) eines Anti-Aquaplaning-Systems nach einem der Ansprüche 1 bis 7, umfassend:
- Aktivieren der Versorgungseinheit (6), um das Betriebsflüssigkeitsgemisch aus der Speichereinheit (2) zu saugen und das Betriebsflüssigkeitsgemisch zu dem mindestens einen Flüssigkeitsspeicher (14) zu schicken, bis ein Fülldruck des mindestens einen Flüssigkeitsspeichers (14) erreicht ist,
- Beenden der Aktivierung der Versorgungseinheit (6), wenn der Fülldruck erreicht ist,
- Ermöglichen eines Durchflusses von Betriebsflüssigkeitsgemisch in der Fluidverbindung zwischen dem mindestens einen Flüssigkeitsspeicher (14) und dem ersten Injektor (10) und dem zweiten Injektor (12) im Falle eines Eingreifens des Anti-Aquaplaning-Systems (1), das das Spritzen von Flüssigkeit mithilfe des ersten Injektors (10) und des zweiten Injektors (12) umfasst,
- Unterbinden des Durchflusses von Betriebsflüssigkeitsgemisch in der Fluidverbindung zwischen dem mindestens einen Flüssigkeitsspeicher (14) und dem ersten Injektor (10) und dem zweiten Injektor (12) am Ende des Eingriffs des Anti-Aquaplaning-Systems,
- Reaktivieren der Versorgungseinheit (6) zum Füllen des Flüssigkeitsspeichers (14) mit dem Betriebsflüssigkeitsgemisch, bis ein Fülldruck erreicht ist, wobei das Reaktivieren der Versorgungseinheit (6) nach dem Unterbinden des Durchflusses des Betriebsflüssigkeitsgemischs erfolgt.

9. Verfahren nach Anspruch 8, ferner umfassend das Ermöglichen eines Durchflusses von Betriebsflüssigkeitsgemisch vom Zuführverteiler (DM) zum Waschverteiler (28) und vom Waschverteiler zu einer oder mehr hydraulischen Waschleitungen (32, 34, 36, 38, 40, 42) des Waschverteilers, um das Betriebsflüssigkeitsgemisch in Richtung entsprechender Sensoren oder Ausrüstung eines Fahrzeugs zum Reinigen der Sensoren oder Ausrüstung abzugeben, wobei das Ermöglichen des Durchflusses von Betriebsflüssigkeitsgemisch vom Zuführverteiler (DM) zum Waschverteiler (28) das Verringern des Drucks des vom Zuführverteiler (DM) kommenden Betriebsflüssigkeitsgemischs umfasst.

10. Verfahren nach Anspruch 8 oder Anspruch 9, wobei das Aktivieren der Versorgungseinheit (6) zum Saugen des Betriebsflüssigkeitsgemischs aus der Speichereinheit (2) das Unterbinden des Durchflusses von Betriebsflüssigkeitsgemisch in der Fluidverbindung zwischen dem mindestens einen Flüssigkeitsspeicher (14) und dem ersten Injektor (10) und dem zweiten Injektor (12) umfasst.

11. Verfahren nach Anspruch 9, wobei das Ermöglichen eines Durchflusses von Betriebsflüssigkeitsgemisch vom Zuführverteiler (DM) zum Waschverteiler (28) sowohl bei aktiver Versorgungseinheit (6) als auch bei inaktiver Versorgungseinheit erfolgen kann, wobei der Durchlauf von Betriebsflüssigkeitsgemisch in der Fluidverbindung zwischen dem mindestens einen Flüssigkeitsspeicher (14) und dem ersten Injektor (10) und dem zweiten Injektor (12) unterbunden ist.

12. Kraftfahrzeug, umfassend ein Anti-Aquaplaning-System nach einem der Ansprüche 1 bis 7.

## Revendications

1. Système anti-aquaplanage (1) pour un véhicule automobile, comprenant :
- une unité de stockage (2) pour des liquides de fonctionnement
- une unité d'alimentation (6)
- une unité de distribution (8),
dans lequel :
- ladite unité de distribution (8) comprend au moins un premier injecteur et un second injecteur (10, 12) configurés pour injecter du liquide vers le sol à une position située devant, respectivement, une bande de roulement droite (RT) et une bande de roulement gauche (LT) d'une roue droite (R) et d'une roue gauche (L) d'un essieu du véhicule automobile, et **caractérisé par**
au moins un accumulateur de fluide (14) configuré pour stocker du liquide sous pression et en communication fluidique avec ledit premier injecteur (10) et ledit second injecteur (12),
- dans lequel ladite unité d'alimentation (6 ; 106) est configurée pour aspirer un mélange de liquide de fonctionnement à partir de ladite unité de stockage (2) et pour refouler ledit mélange de liquide de fonctionnement audit au moins un accumulateur de fluide (14), et
dans lequel l'unité de distribution (8) comprend au moins un élément de commande d'écoulement (V10, V12) configuré pour permettre un écoulement du mélange de liquide de fonctionnement dans la communication fluidique entre ledit au moins un accumulateur de fluide (14) et ledit premier injecteur (10) et ledit second injecteur (12) en cas d'intervention du système anti-aquaplanage (1) comprenant l'injection de liquide au moyen dudit premier injecteur (10) et dudit second injecteur (12), et pour désactiver un écoulement du mélange de liquide de fonctionnement dans la communication fluidique entre ledit au moins un accumulateur de fluide (14) et ledit premier injecteur (10) et ledit second injecteur (12) afin de charger ledit accumulateur de fluide (14) avec le mélange de liquide de fonctionnement.

2. Système anti-aquaplanage (1) selon la revendication 1, dans lequel ladite unité d'alimentation (6) comprend une pompe comprenant un orifice d'entrée (24) et un orifice de refoulement (26),
ledit orifice d'entrée (24) étant relié hydrauliquement à un collecteur d'entrée (IM), ladite unité de stockage étant reliée hydrauliquement audit collecteur d'entrée (IM),
ledit orifice de refoulement (26) étant relié hydrauliquement à un collecteur de refoulement (DM), ladite unité de distribution étant reliée hydrauliquement audit collecteur de refoulement (DM).

3. Système anti-aquaplanage (1) selon la revendication 2, comprenant, en variante :
- un accumulateur de fluide unique (14) en communication fluidique avec ledit premier injecteur (10) et ledit second injecteur (12), ledit accumulateur de fluide unique (14) étant relié audit collecteur de refoulement (DM) au niveau d'une première jonction (J14), ledit premier injecteur (10) et ledit second injecteur (12) étant reliés audit collecteur de refoulement (DM) au niveau d'une seconde jonction (J8) en aval de ladite première jonction (J14), un premier élément de commande d'écoulement (V10) agencé hydrauliquement entre ladite seconde jonction (18) et ledit premier injecteur (10), et un second élément de commande d'écoulement (V12) agencé hydrauliquement entre ladite seconde jonction (J8) et ledit second injecteur (12),
- un accumulateur de fluide unique (14) en communication fluidique avec ledit premier injecteur (10) et ledit second injecteur (12), ledit accumulateur de fluide unique (14) étant relié audit collecteur de refoulement (DM) au niveau d'une première jonction (J14), ledit premier injecteur (10) et ledit second injecteur (12) étant reliés audit collecteur de refoulement (DM) au niveau d'une seconde jonction (J8) en aval de ladite première jonction (J14), un élément de commande d'écoulement unique agencé hydrauliquement entre ladite première jonction (J14) et ladite seconde jonction (J8),
- un premier accumulateur de fluide (14) en communication fluidique avec ledit premier injecteur (10) et un second accumulateur de fluide (14) en communication fluidique avec ledit second injecteur (12), un premier élément de commande d'écoulement (V10) agencé hydrauliquement entre ledit premier accumulateur de fluide (14) et ledit premier injecteur (10), et un second élément de commande d'écoulement (V12) agencé hydrauliquement entre ledit second accumulateur de fluide (14) et ledit second injecteur (12), ledit premier accumulateur de fluide (14) et ledit second accumulateur de fluide (14) étant reliés audit collecteur de refoulement au niveau d'une jonction unique (J8).

4. Système anti-aquaplanage (1) selon l'une quelconque des revendications précédentes, dans lequel ladite unité de stockage (2) comprend au moins un réservoir principal (16) configuré pour stocker un liquide de fonctionnement principal et un réservoir auxiliaire (16, 17) configuré pour stocker un liquide de fonctionnement auxiliaire correspondant, chacun dudit réservoir principal (16) et d'au moins un réservoir auxiliaire (16, 17) ayant une liaison hydraulique à ladite unité d'alimentation (6), et
dans lequel ledit système (1) comprend en outre une unité de mélange (104) configurée pour mélanger une quantité prédéterminée dudit liquide de fonctionnement principal avec une quantité prédéterminée dudit liquide de fonctionnement auxiliaire, définissant le mélange de liquide de fonctionnement dudit système.

5. Système anti-aquaplanage (1) selon la revendication 4, dans lequel ledit collecteur d'entrée (IM) est relié hydrauliquement audit réservoir principal (16) et audit réservoir auxiliaire (17), et dans lequel ladite unité de mélange (4) comprend une soupape à commande électrique (V17) pour ledit réservoir auxiliaire (17) configurée pour permettre de manière sélective un écoulement de liquide dans la liaison hydraulique entre ledit réservoir auxiliaire (17) et ledit collecteur d'entrée (IM), de manière à permettre le mélange entre ledit liquide de fonctionnement principal et ledit liquide de fonctionnement auxiliaire correspondant afin de définir le mélange de liquide de fonctionnement du système.

6. Système anti-aquaplanage (1) selon la revendication 2, comprenant en outre un collecteur de lavage (28) en communication fluidique avec ledit collecteur de refoulement (DM), et un élément de commande d'écoulement supplémentaire (V28) configuré pour permettre de manière sélective un écoulement du mélange de liquide de fonctionnement dudit collecteur de refoulement (DM) vers ledit collecteur de lavage (28), le collecteur de lavage (28) comprenant une pluralité de conduites de lavage hydrauliques (32, 34, 36, 38, 40, 42) reliant ledit collecteur de lavage (28) à des dispositifs de lavage correspondants configurés pour distribuer le mélange de liquide de fonctionnement vers des capteurs ou équipements correspondants d'un véhicule afin de nettoyer lesdits capteurs ou équipements, où chaque conduite de lavage hydraulique comprend une soupape configurée pour permettre de manière sélective l'écoulement dudit mélange de liquide de fonctionnement vers le dispositif de lavage correspondant.

7. Système anti-aquaplanage (1) selon la revendication 2, comprenant en outre un capteur de pression (PS14) configuré pour détecter une pression du mélange de liquide de fonctionnement dans ledit collecteur de refoulement (DM).

8. Procédé pour distribuer un mélange de liquide de fonctionnement à une unité de refoulement (8 ; 108) d'un système anti-aquaplanage selon l'une quelconque des revendications 1 à 7, comprenant :
- l'activation de ladite unité d'alimentation (6) pour aspirer ledit mélange de liquide de fonctionnement à partir de ladite unité de stockage (2) et pour envoyer ledit mélange de liquide de fonctionnement vers ledit au moins un accumulateur de liquide (14) jusqu'à ce qu'une pression de charge dudit au moins un accumulateur de liquide (14) soit atteinte,
- l'arrêt de l'activation de ladite unité d'alimentation (6) lorsque ladite pression de charge est atteinte,
- l'autorisation d'un écoulement du mélange de liquide de fonctionnement dans la communication fluidique entre ledit au moins un accumulateur de fluide (14) et ledit premier injecteur (10) et ledit second injecteur (12) en cas d'intervention du système anti-aquaplanage (1) comprenant une injection de liquide au moyen dudit premier injecteur (10) et dudit second injecteur (12),
- la désactivation de l'écoulement du mélange de liquide de fonctionnement dans la communication fluidique entre ledit au moins un accumulateur de fluide (14) et ledit premier injecteur (10) et ledit second injecteur (12) à la fin de ladite intervention du système anti-aquaplanage,
- la réactivation de ladite unité d'alimentation (6) pour charger ledit accumulateur de fluide (14) avec ledit mélange de liquide de fonctionnement jusqu'à ce que la pression de charge soit atteinte, ladite réactivation de ladite unité d'alimentation (6) étant effectuée après ladite désactivation de l'écoulement du mélange de liquide de fonctionnement.

9. Procédé selon la revendication 8, comprenant en outre l'autorisation d'un écoulement du mélange de liquide de fonctionnement dudit collecteur de refoulement (DM) vers ledit collecteur de lavage (28) et dudit collecteur de lavage vers une ou plusieurs conduites de lavage hydrauliques (32, 34, 36, 38, 40, 42) dudit collecteur de lavage afin de refouler le mélange de liquide de fonctionnement vers des capteurs ou équipements correspondants d'un véhicule afin de nettoyer lesdits capteurs ou équipements, où ladite autorisation d'un écoulement du mélange de liquide de fonctionnement dudit collecteur de refoulement (DM) vers ledit collecteur de lavage (28) comprend la réduction de la pression du mélange de liquide de fonctionnement provenant dudit collecteur de refoulement (DM).

10. Procédé selon la revendication 8 ou 9, dans lequel ladite activation de ladite unité d'alimentation (6) pour aspirer ledit mélange de liquide de fonctionnement à partir de ladite unité de stockage (2) comprend la désactivation de l'écoulement du mélange de liquide de fonctionnement dans la communication fluidique entre ledit au moins un accumulateur de fluide (14) et ledit premier injecteur (10) et ledit second injecteur (12).

11. Procédé selon la revendication 9, dans lequel ladite autorisation d'un écoulement du mélange de liquide de fonctionnement dudit collecteur de refoulement (DM) vers ledit collecteur de lavage (28) peut être effectuée à la fois avec ladite unité d'alimentation (6) active et avec ladite unité d'alimentation inactive, le passage du mélange de liquide de fonctionnement dans la communication fluidique entre ledit au moins un accumulateur de fluide (14) et ledit premier injecteur (10) et ledit second injecteur (12) étant désactivé.

12. Véhicule automobile comprenant un système anti-aquaplanage selon l'une quelconque des revendications 1 à 7.
